# EUROPÄISCHE PATENTSCHRIFT

(11) **EP 1 268 243 B1**
(45) Veröffentlichungstag und Bekanntmachung des Hinweises auf die Patenterteilung: **08.12.2004**
(21) Anmeldenummer: 01915321.2
(22) Anmeldetag: 08.03.2001
(51) Int. Cl.: B60R 25/02

(54) **LENKSCHLOSS FÜR FAHRZEUGE, INSBESONDERE KRAFTFAHRZEUGE**
STEERING LOCK FOR VEHICLES, ESPECIALLY MOTOR VEHICLES
SERRURE DE DIRECTION POUR VEHICULES, EN PARTICULIER POUR VEHICULES AUTOMOBILES

(30) Priorität: 31.03.2000 DE 10016095
(43) Veröffentlichungstag der Anmeldung: 02.01.2003
(73) Patentinhaber: Huf Hülsbeck & Fürst GmbH & Co. KG, 42551 Velbert (DE)
(72) Erfinder: PLATZER, Bruno, 42551 Velbert (DE)
(74) Vertreter: Mentzel, Norbert, Dipl.-Phys.
(86) Internationale Anmeldenummer: PCT/EP2001/002613
(87) Internationale Veröffentlichungsnummer: WO 2001/074635

(56) Entgegenhaltungen:
- DE-A- 4 136 568
- FR-A- 2 780 012
- US-A- 4 328 688

## Beschreibung

Die Erfindung richtet sich auf ein Lenkschloss der im Oberbegriff des Anspruches angegebenen Art. Das zur Schlüsselabzugssicherung gehörende Fühlglied hat die Aufgabe den Sperrbolzen solange in dessen Freigabestellung festzuhalten, bis der Schlüssel aus dem Zylinderkern herausgezogen ist. Wird der Zylinderkern vom eingesteckten Schlüssel aus einer Arbeitsstellung in seine Nullstellung zurückgeführt, so kann der Sperrbolzen nicht versehentlich in seine Blockadeposition gelangen und die Lenkung sperren.

Bei dem bekannten Lenkschloss dieser Art (DE 43 07 339 C2) besteht das Fühlglied aus einem Schieber, der in der Radialaussparung des Zylinderkerns radial verschiebbar ist. Der Sperrbolzen ist zwischen seiner Blockade- und Freigabeposition radial zur Zylinderachse bewegbar und wird dabei von einem Exzenter gesteuert. Dieser Exzenter ist mit einer Steuerkurve für die zur Schlüsselabzugssicherung gehörende Hubstange einstückig ausgebildet und steht unter einer axialen Federkraft. Diese Federkraft drückt die ihrerseits federbelastete Hubstange gegen eine am Außenende des Fühlglieds vorgesehene Neigungsfläche. Dazu besitzt die Hubstange eine Gegenneigungsfläche, welche sich im Inneren einer Gabelung am Hubstangen-Ende befindet. In Nullstellung, vor Schlüsselabzug, umgreift die Gabelung das Außenende des radialen Schiebers. Um für eine gute Führung des Schiebers zu sorgen weist dieses bekannte Lenkschloss im Kopfbereich einen verhältnismäßig großen Zylinderdurchmesser auf. Dies vergrößerte unerwünschterweise die radialen Dimensionen des Lenkschlosses.

Aus der deutschen Patentschrift DE 41 36 568 C2 ist ein Lenkschloss für Fahrzeuge bekannt, wo ein schwingbarer Hebel als Fühlglied vom Schfüsselkopf her axial in eine Aussparung des Zylinderkerns eingesetzt werden kann. Diese Aussparung erstreckt sich auch in radialer Richtung, so dass im eingesetzten Zustand ein Vorsprung des Hebels in eine Führungsnut an einem Schieberteil eingreifen kann. Zur Freigabe des radial zur Zylinderachse bewegbaren Sperrbolzens wird der Rotor mittels des Schlüssels gedreht und eine Nocke des Rotors verschiebt den Schieber in Zylinderkopfrichtung, wobei einerseits die Verbindung zum Sperrbolzen gelöst wird und andererseits die Führungsnut so positioniert wird, dass der Hebel eingreifen kann. In dieser Stellung kann der Rotor nicht wieder zurückgedreht werden. Dazu ist zusätzlich ein Axialhub notwendig. Für eine sichere Arbeitsweise und genaue Positionierung sind enge Toleranzen in der Ausbildung des Hebels und der zugehörigen Aussparung einzuhalten.

Der Erfindung liegt die Aufgabe zugrunde, ein raumsparendes Lenkschloss der im Oberbegriff des Anspruches 1 genannten Art zu entwickeln, das sich schnell und bequem montieren lässt. Dies wird erfindungsgemäß durch die im Kennzeichen des Anspruches 1 angegebenen Maßnahmen erreicht, denen folgende besondere Bedeutung zukommt.

Weil das Fühlglied aus einem Hebel besteht, der eine definierte Schwenkachse mit dem Zylinderkern besitzt, entfallen platzaufwendige radiale Führungen. Dadurch ist es möglich, einen Schließzylinder mit einem sehr kleinen Kopfdurchmesser zu verwenden. Eine vorteilhafte Maßnahme der Erfindung besteht darin. diesen Hebel schnell und zuverlässig zu montieren. Dazu wird der Hebel zweischenklig ausgebildet und die hebelseitigen Lagerteile in zwei Lagerhälften gegliedert, die an diesen Schenkeln sitzen. Durch die Einführschrägen an den Lagerhälften und die entsprechenden Gegeneinführschrägen an der zum Zylinderkern gehörenden Gegeneinführschrägen ist eine Schnappmontage des Hebels in den Zylinderkern möglich. Deshalb kann man den kompletten Hebel einerseits und den Zylinderkern andererseits mit ihren Lagerhälften und Gegenlagerhälften komplett vorfertigen und dann durch bequemes radiales Ineinanderführen dieser beiden Bauteile bereits ihre Verbindung erhalten.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1,: im Axialschnitt und in Vergrößerung, nur die wesentlichsten Teile des Lenkschlosses, wenn der zugehörige Schlüssel entfernt ist und sich der Zylinderkern in seiner Nullstellung befindet,
- Fig. 2,: in einer der Fig. 1 entsprechenden Darstellung zwar auch die Nullstellung des Zylinderkerns, jedoch nach dessen Rückdrehung aus einer Arbeitsstellung und bei noch stehenden Schlüssel,

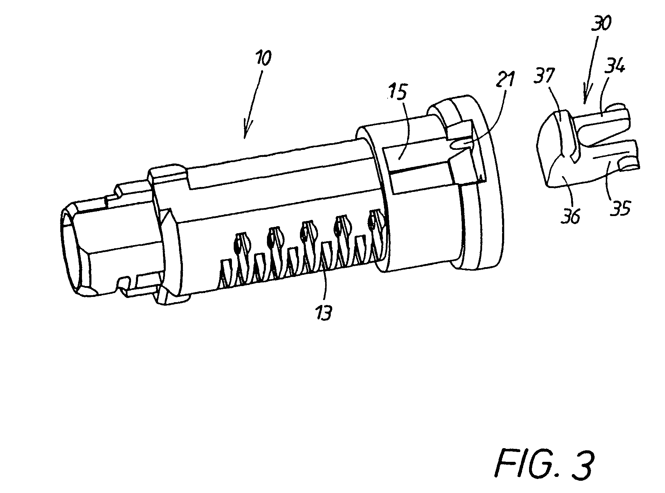

- Fig. 3: eine Explosionsdarstellung zweier wesentlicher Teile des erfindungsgemäßen Lenkschlosses vor ihrer Montage,

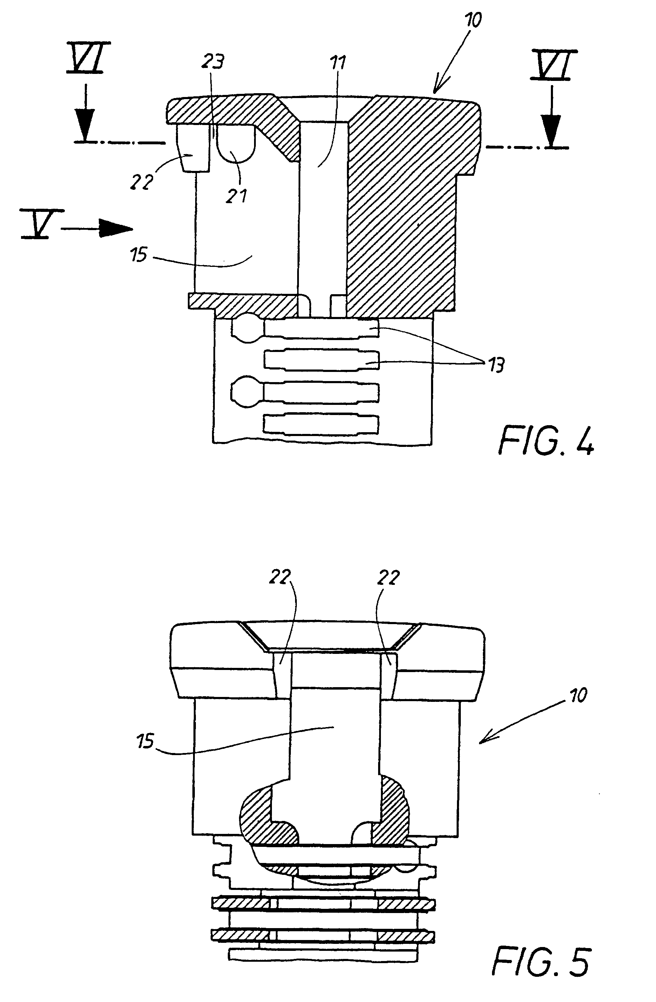

- Fig. 4,: in starker Vergrößerung, einen teilweisen Axialschnitt durch den Zylinderkern des erfindungsgemäßen Lenkschlosses,
- Fig. 5,: teilweise im Ausbruch, eine Draufsicht auf den Zylinderkern in Blickrichtung des Pfeils V von Fig. 4,
- Fig. 6: einen Querschnitt durch den Zylinderkern von Fig. 4 längs der dortigen Schnittlinie VI - VI,
- Fig. 7: einen Schnitt durch den zweiten, in Fig. 3 gezeigten Bauteil des erfindungsgemäßen Lenkschlosses, teilweise im Querschnitt längs der Schnittlinie VII - VII von Fig. 8,
- Fig. 8 + 9: die Seitenansicht und die Draufsicht auf den in Fig. 7 gezeigten anderen Bauteil und zwar Fig. 9 in Blickrichtung des Pfeils IX von Fig. 8, und
- Fig. 10,: in einem der Fig. 6 entsprechenden Querschnitt, die Montagelage der beiden in Fig. 6 und 7 gezeigten Bauteile des Lenkschlosses.

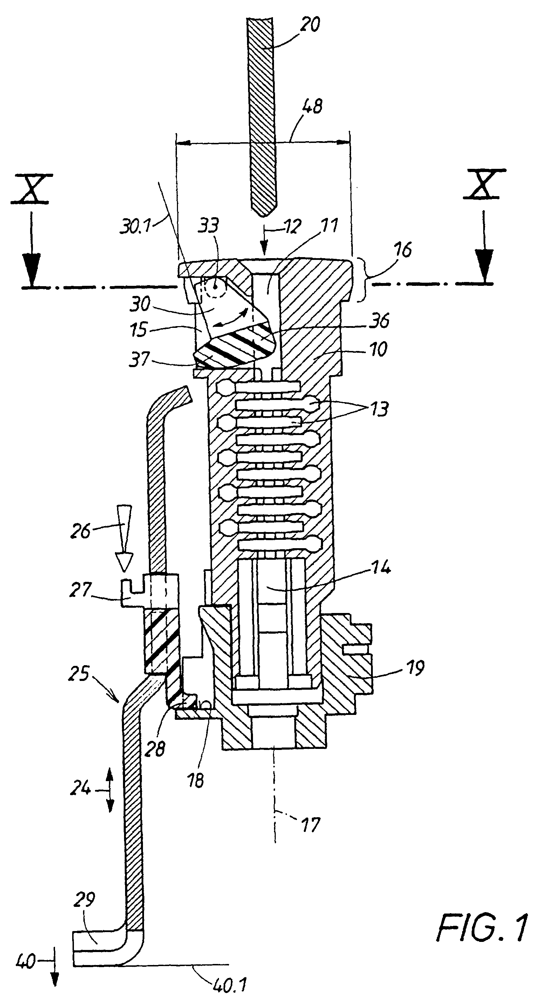

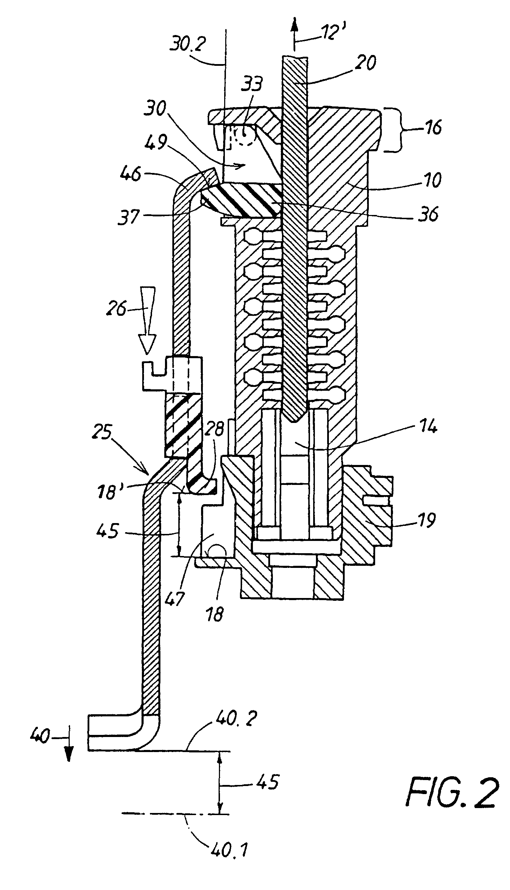

In den Zeichnungen ist von dem Schließzylinder des Lenkschlosses lediglich der Zylinderkern 10 gezeigt. Die Zylinderführung oder das Gehäuse sind weggelassen. Der Zylinderkern 10 besitzt einen Schlüsselkanal 11 zur Aufnahme eines Schlüssels 20. Der Schlüssel kann in einer sogenannten "Nullstellung", welche die Ausgangsstellung des Zylinderkerns 10 im Lenkschloss kennzeichnet, im Sinne des Pfeils 12 von Fig. 1 eingesteckt oder im Sinne des Pfeils 12' von Fig. 2 herausgezogen werden. Der Zylinderkern besitzt Kammern 13 zur Aufnahme von nicht näher gezeigten federbelasteten Zuhaltungen, die bei abgezogenem Schlüssel eine Drehung des Zylinderkerns 10 ausschließen Bei eingestecktem Schlüssel geben die Zuhaltungen den Zylinderkern 10 frei und erlauben ihn in eine oder mehrere nicht näher gezeigte Arbeitsstellungen zu verdrehen, was in den Zeichnungen nicht näher gezeigt ist.

Der Zylinderkern 10 besitzt hinter den Kammern 13 einen Raum 14 für nicht näher gezeigte elektrische Kontakte, die bei eingestecktem Schlüssel 20, gemäß Fig. 2 geschlossen sind und elektrische Steuermittel für die Arbeitsstellung des Zylinderkerns wirksam setzen. Der Zylinderkern 10 besitzt in seinem Koptbereich 16 eine Radialaussparung 15, die bis zum Schlüsselkanal 11 reicht. Dort ist ein in besonderer Weise ausgebildetes Fühlglied 30 angeordnet, welches auf den im Schlüsselkanal 11 eingesteckten Schlüssel 20 auf mechanischem Wege anspricht, wie Fig. 2 zeigt. Dieses Fühlglied 30 ist Bestandteil einer Wirkverbindung, zu welcher eine parallel zur Zylinderachse 17 verlaufende Hubstange 25 gehört Diese Hubstange steht unter der Wirkung einer nicht näher gezeigten Feder, welche die durch den Pfeil 26 in Fig. 1 verdeutlichte Federbelastung erzeugt Zur Abstutzung der Feder dient eine Schulter 27. Die Schulter 27 ist Bestandteil eines in einem Ausbruch der Hubstange 25 vorgesehenen Einsatzes, der einen radialen Finger 28 aufweist. Dieser Finger 28 stützt sich an einer axial profilierten Steuerfläche 18 ab, die zu einem sowohl axialfest als auch drehfest mit dem Zylinderkern 10 verbundenen Mitnehmer 19 gehört. Die Hubstange 25 besitzt eine abgewinkelte Anschlussstelle 29 für einen zwar außerhalb der Zeichnungen liegenden, aber durch den Pfeil 40 in den Fig. 1 und 2 verdeutlichten Sperrbolzen 40. Der Sperrbolzen 40 ist an der Anschlussstelle 29 mit der Hubstange 25 verbunden und führt mit dieser gemeinsame Längsbewegungen im Sinne des Doppelpfeils 24 von Fig. 1 aus.

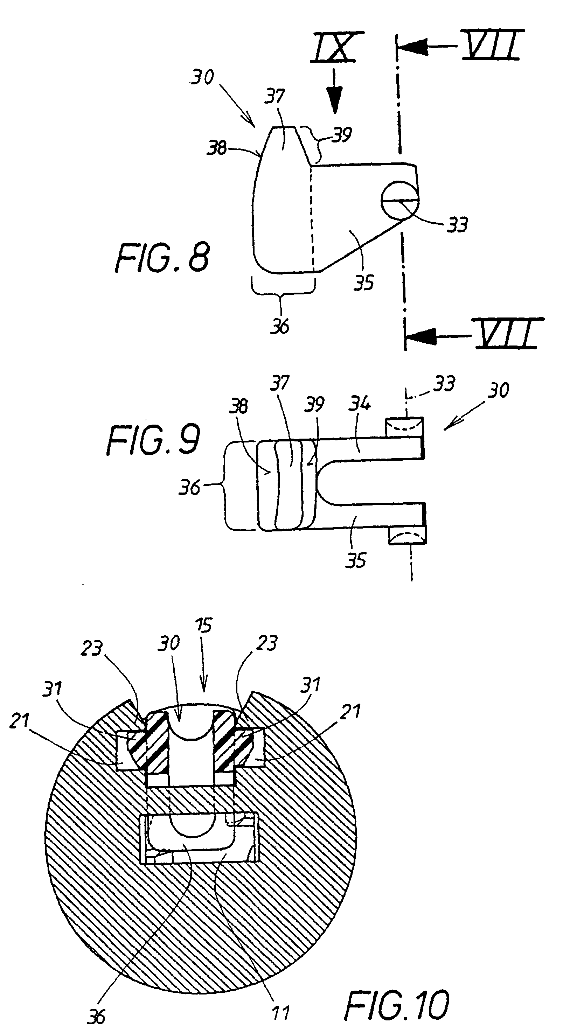

Bei der Erfindung besteht das Fühlglied aus einem Hebel 30, der in der Aussparung 15 des Zylinderkerns 10 an der mit 33 gekennzeichneten Stelle schwenkbar gelagert ist. Diese Schwenkachse 33 verläuft quer zu der Zylinderachse 17 und ist dieser gegenüber etwas radial nach außen gesetzt. Wie vor allem aus Fig. 9 zu entnehmen ist, hat der Hebel 30, in der Draufsicht gemäß Pfeil IX von Fig. 8 gesehen, eine U-Form mit zwei Schenkeln 34, 35, welche miteinander durch einen Stegbereich 36 verbunden sind. Der Stegbereich 36 besitzt eine radial nach außen weisende Nase 37, die Schwenkachsen-Lage 33 ist auch in den Fig. 8 und 9 angedeutet Der Stegbereich 36 besitzt an seiner der Schwenkachse 33 abgekehrten Seite einen Kreisumriss 38, der zur Schwenkachse 33 koaxial ist. Auf der gegenüberliegenden Seite besitzt die Nase 37 eine radial nach außen weisende Neigungsfläche 39. Die Neigungsfläche 39 und der Kreisumriss 38 erzeugen eine Verjüngung zur Nasenspitze hin.

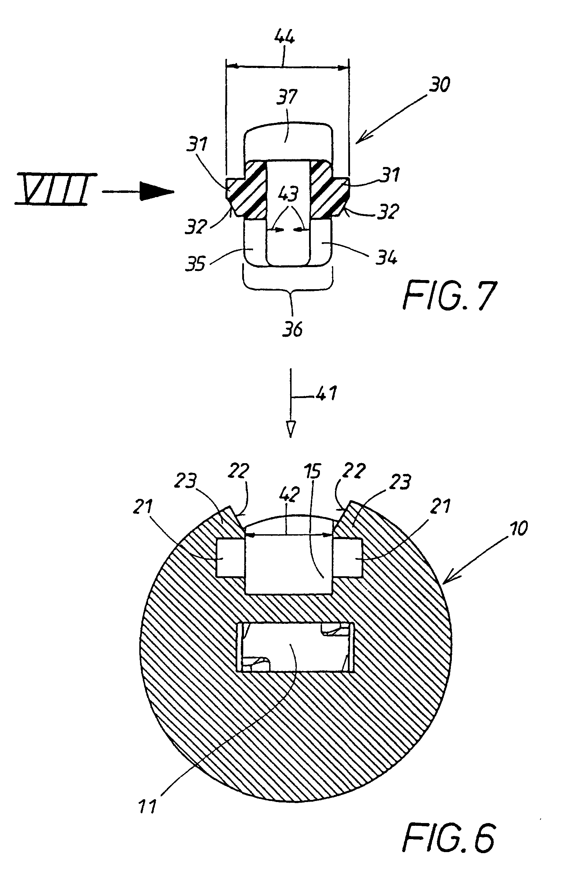

Ausweislich der Fig. 7 besitzt der Hebel 30 an seinen beiden Schenkeln 34. 35 die beiden Hälften 31 von Lagerteilen für die erwähnte Schwenkachse 33. Diesen sind, wie aus Fig. 6 hervorgeht, die komplementären Hälften 21 entsprechender Gegenlagerteile in der Radialaussparung 15 des Zylinderkerns 10 zugeordnet. Die Lagerhälften 31 bestehen im vorliegenden Fall aus Zapfen 31, die auf den voneinander wegweisenden Schenkelaußenflächen der beiden U-Schenkel 34, 35 angeordnet sind. Die Gegenlagerhälften 21 bestehen aus den entsprechenden Bohrungen. Die Bohrungen 21 sind, wie Fig. 6 zeigt, durch Wandteile 23 beidseits der Radialaussparung 26 abgedeckt.

Zur Montage wird der Hebel 30 im Sinne des Bewegungspfeils 41 in die Radialaussparung 15 des in Fig. 6 gezeigten Zylinderkerns 10 bewegt. Dort befinden sich gegeneinanderweisende Gegeneinführschrägen 22, welche die lichte Weite 42 der Radialaussparung 15 gegenüber der aus Fig. 7 erkennbaren Breite 43 des Hebels 30 im Bereich der Zapfen 31 verengen. Dazu sind die Zapfen an ihren Enden mit Schrägschnitten 32 versehen, welche ebenfalls Einführschrägen für die Montagebewegung 41 erzeugen. Die Einführschrägen 32 laufen auf die zylinderkernseitigen Gegeneinführschrägen 22 auf und bewegen die beiden Schenkel 34, 35 im Sinne der Pfeile 43 von Fig. 7 aufeinander zu. Der Hebel 30 besteht nämlich aus verhältnismäßig elastischem Kunststoff, der diese Gegeneinanderbewegung 43 der Schenkel 34, 35 gestattet. Dadurch wird die Baubreite 44 des Hebels 30 so weit verengt, dass die Zapfen 31 in die ihnen zugeordneten Bohrungen 21 des Zylinderkerns 10 einschnappen.

Damit liegt eine radiale Einsteckmontage des Hebels 30 am Zylinderkern 10 vor. Die Einführschrägen 22 sind durch schräg gegeneinanderweisenden Flächen der die Bohrungen 21 abdeckenden Wandteile 23 gebildet. Der Montagefall ist in Fig. 10 im Querschnitt und in den Fig. 1 und 2 im Längsschnitt dargestellt. Daraus ist folgende Bewegung der Bauteile entnehmbar.

Die Hubstange 25 befindet sich in einer nicht näher gezeigten Axialführung im Gehäuse des Schließzylinders, der die erwähnte Längsbewegung 24 der Hubstange 25 gestattet. Die Hubstange nimmt ihre aus Fig. 1 entnehmbare Absenklage ein, die durch die Hilfslinie 40.1 gekennzeichnet ist. In diesem Fall befindet sich nämlich der mit der Hubstange 25 gekuppelte, nicht näher gezeigte Sperrbolzen 40 in entsprechender axialer Position. In dieser Position ist die dem Lenkschloss zugeordnete, nicht näher gezeigte Lenkung des Kraftfahrzeugs blockiert; ein zur Lenkung beispielsweise dienendes Lenkrad lässt sich nicht verdrehen. Dies dient der Diebstahlsicherung. Deshalb soll diese Position 40.1 "Blockadeposition" genannt werden.

In dieser Blockadeposition 40.1 befindet sich der Zylinderkern 10 in der bereits mehrfach erwähnten Nullstellung, wo ein Einstecken 12 des Schlüssels 20 möglich ist. Solange der Schlüssel 20 sich nicht im Schlüsselkanal 11 befindet, kann sich der Hebel 30 um seine Schwenkachse 33 in die durch die Hilfslinie 30.1 in Fig. 1 verdeutlichte Schwenklage 30.1 verschwenken, wo er mit dem inneren Teil seines Stegbereichs 36 in den Schlüsselkanal 11 hineinragen kann. In der Schwenklage 30.1 von Fig. 1 ragt die Nase 37 nicht aus dem Zylinderkern 10 heraus, in jedem Fall gelangt sie nicht in den Längsbewegungsweg 24 der Hubstange 25. Daher soll diese Schwenklage 30.1 nachfolgend "unwirksame Schwenklage" bezeichnet werden.

Wird, ausgehend von Fig. 1, der Schlüssel 20 im Sinne des Pfeils 12 eingesteckt, so gelangt der Hebel 30 in eine in Fig. 2 durch die Hilfslinie 30.2 gekennzeichnete Schwenklage 30.2. Dann ragt die Hebelnase 37 aus dem Zylinderkern 10 radial heraus. Bei der Drehung des Zylinderkerns 10 wirkt die Nase 37 mit der Hubstange 25 zusammen, weshalb diese Schwenklage 30.2 sich als "wirksame Schwenklage" des Hebels 30 erweist.

Geht man von der Ausgangssituation der Fig. 1 aus und steckt man dann den Schlüssel 20 in den Zylinderkern 10 ein, so wird lediglich der Hebel 30 durch den auf das innere Ende des Stegs 36 auflaufende Schlüsselende in die in Fig. 2 gezeigte wirksame Schwenkposition 30.2 überführt. Wird dann der Zylinderkern 10 durch den eingesteckten Schlüssel aus der Nullstellung von Fig. 1 in die bereits erwähnte Arbeitsstellung überführt, so führt auch der Mitnehmer 19 die Zylinderdrehung aus Über seine Steuerfläche 18, an welcher sich der Finger 28 abstützt, wird die Hubstange 25 gegen ihre Federbelastung 26 um die aus Fig. 2 ersichtliche Strecke 45 angehoben. Dies vollzieht sich wegen einer wendelförmigen Steigung der Steuerfläche 18, die den Finger 28 schließlich auf das höhere Niveau 18' führt. Dabei wird der bereits mehrfach erwähnte, an der Hubstange 25 angekuppelte Sperrbolzen 40 in die mit der Hilfslinie 40.2 gekennzeichnete Position überführt. In dieser Position 40.2 gibt der Sperrbolzen 40 die Lenkung frei; es liegt dann die Freigabeposition 40.2 vor.

Wird der Zylinderkern 10 über den Schlüssel 20 wieder in seine Nullstellung zurückgeführt, so dreht sich die radial herausragende Nase 37 des Hebels 30 unter ein abgewinkeltes Endstück 46 der Hubstange 25. Dieses Endstück 46 besitzt eine Gegenneigungsfläche 49, welche die vorerwähnte, aus Fig 8 erkennbare Neigungsfläche 39 hintergreift. Zugleich wandert der Finger 28 von der Hubstange 25 über einen axial freien Ausbruch 47 über dem gezeichneten Anfangsteil der Steuerfläche 18. Aufgrund der Federbelastung 26 wäre zwar die Hubstange 25 bereit durch den Ausbruch 47 bis zu diesem Anfangsteil 18 der Steuerfläche zu fahren, wird aber daran aufgrund des Hintergriffs 49, 39 zwischen dem Stangenende 46 und der Hebelnase 37 gehindert. Der Hebel 30 stützt sich dabei mit dem Innenende seines Stegbereichs 36 an dem Schlüssel 20 ab. Solange der Schlüssel 20 im Zylinderkern 10 steckt wird, ausweislich der Fig. 2, der Bolzen 40 in seiner Freigabeposition 40.2 gehalten.

Wird nun der Schlüssel 20 im Sinne des Pfeils 12' von Fig. 2 herausgezogen, so findet der Hebel 30 keine Abstützung mehr. Aufgrund der Neigungslage der zusammenwirkenden Flächen 39, 49 drückt die Federbelastung 26 aufgrund einer radialen Kraftkomponente die Hubstange 25 den Hebel 30 aus seiner wirksamen Schwenklage 30.2 von Fig. 2 in seine unwirksame Schwenklage 30.1 von Fig. 1 zurück. Der innere Stegbereich 36 gelangt in den Schlüsselkanal 11. Dann hat die Hebelnase 37 das Stangenendstück 46 freigegeben. Dadurch wird die Hubstange 45 aufgrund ihrer Federbelastung 26 wieder axial zurückgedrückt Der zugehörige Sperrbolzen 40 gelangt dann wieder in seine Blockadeposition 40.1 von Fig. 1.

Wegen der Schwenklagerung 33 des Hebels 30 benötigt der Zylinderkern 10 nur eine kleine Radialaussparung 15 zum Einschwenken des Hebels in seiner unwirksamen Schwenklage 30.1. Deswegen ergibt sich die aus Fig. 1 erkennbare geringe Breite 48 im Kopfbereich 16 des Zylinderkerns 10. Die Schwenkführung 33 ist sehr präzise und wenig störanfällig.

### Bezugszeichenliste:

- 10: Zylinderkern
- 11: Schlüsselkanal in 10
- 12: Einsteckpfeil von 20 in 11 (Fig. 1)
- 12': Herausziehpfeil von 20 aus 11 (Fig. 2)
- 13: Kammer für Zuhaltung in 10
- 14: Freiraum in 10
- 15: Radialaussparung in 10
- 16: Kopfbereich von 10 (Fig. 1)
- 17: Zylinderachse
- 18: anfängliche Steuerfläche von 19
- 18': endseitige Steuerfläche von 19
- 19: Mitnehmer an 10
- 20: Schlüssel
- 21: Hälfte des Gegenlagerteils, Bohrung
- 22: Gegeneinführschräge bei 21
- 23: Wandteil an 10 bei 21 (Fig. 6)
- 24: Doppelpfeil der Längsbewegung von 25 (Fig. 1)
- 25: Hubstange
- 26: Federbelastung von 25
- 27: Schulter an 25 für 26
- 28: radialer Finger an 25 für 18, 18'
- 29: Anschlussstelle an 25 für 40 (Fig. 1)
- 30: Fühlglied, Hebel
- 30.1: unwirksame Schwenklage von 30 (Fig. 1)
- 30.2: wirksame Schwenklage von 30 (Fig. 2)
- 31: Hälfte der Lagerteile von 30, Lagerzapfen (Fig. 7)
- 32: Einführschräge an 31, Schrägschnitt
- 33: Schwenkachse von 30
- 34: U-Form, erster Schenkel (Fig. 9)
- 35: U-Form, zweiter Schenkel (Fig. 9)
- 36: U-Form, Stegbereich (Fig. 9)
- 37: Nase von 36
- 38: Kreisumriss von 36
- 39: Neigungsfläche von 36
- 40: Pfeil für Lage des Sperrbolzens
- 40.1: Blockadeposition von 40 (Fig. 1)
- 40.2: Freigabeposition von 40 (Fig. 2)
- 41: Pfeil der Einsteckmontage von 30 (Fig. 7)
- 42: lichte Weite von 15 (Fig. 6)
- 43: Pfeil der Gegeneinanderbewegung von 34, 35 (Fig. 7)
- 44: Baubreite von 30 (Fig. 7)
- 45: Hubstrecke von 25 (Fig. 2)
- 46: Endstück von 25
- 47: Ausbruch zwischen 18, 18' für 28 (Fig. 2)
- 48: Breite von 16 (Fig. 1)
- 49: Gegenneigungsflächen an 46 für 39 (Fig. 2)

## Patentansprüche

1. Lenkschloss für Fahrzeuge, insbesondere Kraftfahrzeuge,
mit einem die Lenkung fallweise blockierenden Sperrbolzen (40),
mit einem Schließzylinder, der einen Zylinderkern (10) mit einem Schlüsselkanal (11) zur Aufnahme eines ihm zugeordneten Schlüssels (20) besitzt,
wobei der Zylinderkern (10) mittels des Schlüssels (20) aus einer Nullstellung, die ein Einstecken (12) und Abziehen (12') des Schlüssels (20) gestattet, in mindestens eine Arbeitsstellung überführbar ist, in welcher der Sperrbolzen (40) gegenüber der Lenkung aus einer Blockadeposition (40.1) in eine Freigabeposition (40.2) überführt ist,
mit einer im Kopfbereich (16) des Zylinderkerns (10) vorgesehenen Radialaussparung (15), die bis zum Schlüsselkanal (11) reicht,
und mit einer Wirkverbindung, bestehend einerseits aus einem in der Radialaussparung (15) beweglichen Fühlglied (30), welches auf den im Schlüsselkanal (11) steckenden Schlüssel (20) anspricht,
und andererseits aus einer unmittelbar oder mittelbar auf den Sperrbolzen (40) einwirkenden Hubstange (25),
welche in Stangenlängsrichtung federbelastet (26) ist und von einer mit dem Zylinderkern (10) drehfesten Steuerkurve (18, 18') gegen ihre Federbelastung (26) längsbewegbar (24) ist,
wobei in der Nullstellung des Zylinderkerns (10), vor Schlüsselabzug, das Fühlglied (30) die Hubstange (25) in ihrer gespannten Stangenposition und die gespannte Hubstange (25) den Sperrbolzen (40) in dessen Freigabestellung (40.2) solange festhalten, bis der Schlüssel (20) aus dem Zylinderkern (10) herausgezogen ist,
wobei das Fühlglied aus einem im Zylinderkern (10) schwenkbar gelagerten Hebel (30) besteht, welcher eine radial nach außen weisende Nase (37) für den Angriff der Hubstange (25) besitzt,
wobei der Hebel (30) Lagerteile (31) und der Zylinderkern (10) in der Radialaussparung (15) Gegenlagerteile (21) besitzen, die im Montagefall eine quer zur Zylinderachse (17) verlaufende Schwenkachse (33) des Hebels (30) bestimmen,
**dadurch gekennzeichnet ,**
**dass** der Hebel (30) im Schwenkachsenbereich (33) zweischenklig (34, 35) ausgebildet ist und jeder der beiden Hebelschenkel (34, 35) eine Lagerhälfte (31) der Lagerteile aufweisen und jeder Lagerhälfte (31) eine Gegenlagerhälfte (21) der Gegenlagerteile im Zylinderkern (10) zugeordnet ist,
und **dass** im Bereich der Lagerhälfte (31) und/oder im Bereich der Gegenlagerhälfte (21) gegeneinanderweisende Gegeneinführschrägen (22) oder Einführschrägen (32) vorgesehen sind.

2. Lenkschloss nach Anspruch 1, **dadurch gekennzeichnet, dass** die Einführschrägen (32) in radialer Richtung auf die Zylinderachse (17) zu verlaufen und eine radiale Einsteckmontage (41) im Radialausbruch (15) des Zylinderkerns (10) gestatten.

3. Lenkschloss nach Anspruch 1 oder 2, **dadurch gekennzeichnet, dass** - im Längsschnitt durch seine Schwenkachse (33) gesehen - der Hebel (30) einen U-Querschnitt (34, 35, 36) aufweist,
dass die U-Schenkel (34, 35) gegeneinander federnd (43) ausgebildet sind,
und dass die U-Schenkel (34, 35) auf ihren voneinander wegweisenden Schenkelaußenflächen die beiden Lagerhälften (31) tragen.

4. Lenkschloss nach Anspruch 3, **dadurch gekennzeichnet, dass** die Nase (37) des Hebels den Stegbereich (36) des U-Querschnitts (34, 35, 36) bestimmt

5. Lenkschloss nach Anspruch 3 oder 4, **dadurch gekennzeichnet, dass** der Stegbereich (36) des U-förmigen Hebels (30) auf seiner von der Hebel-Schwenkachse (33) abgekehrten Seite wenigstens bereichsweise einen koaxialen Kreisumriss (38) besitzt.

6. Lenkschloss nach einem der Ansprüche 3 bis 5, **dadurch gekennzeichnet. dass** der Stegbereich des U-förmigen Hebels (30) auf seiner der Hebel-Schwenkachse (33) zugekehrten Seite eine radial nach außen weisende Neigungsfläche (39) besitzt,
dass die Neigungsfläche (39) in der Nullstellung des Zylinderkerns (10), vor Schlüsselabzug, von dem Endstück (46) der Hubstange (25) hintergriffen wird
und dass das Endstück der Hubstange eine Gegenneigungsfläche (49) aufweist.

7. Lenkschloss nach einem der Ansprüche 1 bis 6, **dadurch gekennzeichnet, dass** die beiden Lagerhälften des Hebels (30) aus Zapfen (31) bestehen,
dass die Gegeneinführschrägen (22) durch Schrägschnitte an den Zapfenenden gebildet sind,
dass die Gegenlagerhälften aus Bohrungen (21) bestehen,
dass die Bohrungen radial nach außen durch Wandteile (23) abgedeckt sind
und dass die radial nach außen weisenden Flächen dieser Wandteile (23) geneigt sind und die Gegeneinführschrägen (22) bilden.

8. Lenkschloss nach einem der Ansprüche 1 bis 7, **dadurch gekennzeichnet, dass** die Hubstange (25) einen radialen Finger (28) besitzt, welcher sich im Normalfall auf der mit dem Zylinderkern (10) drehfesten Steuerkurve ( 18, 18) abstützt.

9. Lenkschloss nach einem der Ansprüche 1 bis 8, **dadurch gekennzeichnet, dass** die Hubstange (25) mit dem Sperrbolzen (40) verbunden ist
und dass die Längsbewegung (24) und die Federbelastung (26) der Hubstange (25) zugleich die Bewegung und Federbelastung des Sperrbolzens (40) bestimmen.

## Claims

1. Steering lock for vehicles, particularly motor vehicles,
having a locking bolt (40) which locks the steering as required,
having a locking cylinder which comprises a cylinder core (10) with a key channel (11) for receiving a key (20) associated therewith,
the cylinder core (10) being changeable by means of the key (20) from a neutral position which allows the key (20) to be inserted (12) and withdrawn (12'), into at least one operative position in which the locking bolt (40) is converted from a blocking position (40.1) into a release position (40.2) with regard to the steering,
having a radial recess (15) provided at the top part (16) of the cylinder core (10), extending as far as the key channel (11),
and having an operative connection, consisting on the one hand of a sensor member (30) movable in the radial recess (15), which responds to the key (20) located in the key channel (11),
and on the other hand of a lifting rod (25) acting directly or indirectly on the locking bolt (40),
which is spring-loaded (26) in the longitudinal direction of the rod and is longitudinally movable (24) counter to its spring loading (26) by a control cam (18, 18') connected for rotation with the cylinder core (10),
while in the neutral position of the cylinder core (10), before the key is removed, the sensor member (30) holds the lifting rod (25) in its tensioned position and the tensioned lifting rod (25) holds the locking bolt (40) in its release position (40.2) until the key (20) is removed from the cylinder core (10),
the sensor member consisting of a lever (30) pivotally mounted in the cylinder core (10), which has a radially outwardly pointing lug (37) for engagement of the lifting rod (25),
the lever (30) having bearing parts (31) and the cylinder core (10) having mating bearing parts (21) in the radial recess (15) which on assembly define a pivot axis (33) for the lever (30) which extends transversely with respect to the cylinder axis (17),
**characterised in that**
the lever (30) is constructed with two arms (34, 35) in the region of the pivot axis (33) and each of the two lever arms (34, 35) comprises a bearing half (31) of the bearing parts and each bearing half (31) is associated with a mating bearing half (21) of the mating bearing parts in the cylinder core (10),
and **in that**, in the region of the bearing half (31) and/or in the region of the mating bearing half (21), mating insertion slopes (22) or insertion slopes (32) are provided facing one another.

2. Steering lock according to claim 1, **characterised in that** the insertion slopes (32) extend towards the cylinder axis (17) in the radial direction and allow radial push-in assembly (41) in the radial recess (15) in the cylinder core (10).

3. Steering lock according to claim 1 or 2, **characterised in that** - viewed in longitudinal section through its pivot axis (33) - the lever (30) has a U-shaped cross section (34, 35, 36),
**in that** the arms (34, 35) of the U are springily resilient (43) relative to each other,
and **in that** the arms (34, 35) of the U carry the two bearing halves (31) on their outer surfaces facing away from each other.

4. Steering lock according to claim 3, **characterised in that** the lug (37) of the lever determines the crosspiece region (36) of the U-shaped cross section (34, 35, 36).

5. Steering lock according to claim 3 or 4, **characterised in that** the crosspiece region (36) of the U-shaped lever (30) has a coaxial circular outline (38), at least in parts, on its side remote from the pivot axis (33) of the lever.

6. Steering lock according to one of claims 3 to 5, **characterised in that** the crosspiece region of the U-shaped lever (30) has a radially outwardly facing sloping surface (39), on its side facing the pivot axis (33) of the lever,
**in that** the end portion (46) of the lifting rod (25) engages behind the sloping surface (39) in the neutral position of the cylinder core (10), before the key is removed,
and **in that** the end portion of the lifting rod has a mating sloping surface (49).

7. Steering lock according to one of claims 1 to 6, **characterised in that** the two bearing halves of the lever (30) consist of pegs (31),
**in that** the mating insertion slopes (22) are formed by diagonal cuts on the ends of the pegs,
**in that** the mating bearing halves consist of bores (21),
**in that** the bores are radially outwardly covered by wall portions (23)
and **in that** the radially outwardly facing surfaces of these wall portions (23) are inclined and form the mating insertion slopes (22).

8. Steering lock according to one of claims 1 to 7, **characterised in that** the lifting rod (25) has a radial finger (28) which in normal circumstances rests on the control cam (18, 18') which is connected for rotation with the cylinder core (10).

9. Steering lock according to one of claims 1 to 8, **characterised in that** the lifting rod (25) is connected to the locking bolt (40)
and **in that** the longitudinal movement (24) and the spring loading (26) of the lifting rod (25) simultaneously determine the movement and spring loading of the locking bolt (40).

## Revendications

1. Dispositif de verrouillage de direction pour des véhicules, en particulier des véhicules automobiles,
avec un boulon de blocage (40), bloquant en cas de besoin la direction,
avec un cylindre de fermeture, comprenant un noyau de cylindre (10) avec un canal à clé (11), pour loger une clé (20) lui étant associée,
sachant que le noyau de cylindre (10) est susceptible d'être transféré, au moyen de la clé (20), d'une position neutre, permettant un enfichage (12) et une extraction (12') de la clé (20), en au moins une position de travail, à laquelle le boulon de blocage (40) peut être passé à une position de libération (40.2) depuis une position de blocage (40.1) par rapport à la direction,
avec un évidement radial (15), prévu dans la zone de tête (16) du noyau de cylindre (10), évidement allant jusqu'au canal à clé (11),
et avec une liaison active, composée, d'une part, d'un organe de palpage (30) mobile dans l'évidement radial (15), qui réagit à la clé (20) s'enfichant dans le canal à clé (11),
et, d'autre part, composée d'une tige de levée (25), agissant directement ou indirectement sur le boulon de blocage (40),
qui sollicite élastiquement (26), dans la direction longitudinale de la tige, et est déplaçable longitudinalement (24), à l'encontre de sa sollicitation élastique (26), par une came de commande (18, 18') assujettie en rotation vis-à-vis du noyau de cylindre (10),
où, à la position neutre du noyau de cylindre (10), avant l'extraction de la clé, l'organe de palpage (30) maintient fixée la tige de levée (25) à sa position de tige tendue, et la tige de levée (25) tendue maintient fixé le boulon de blocage (40) à sa position de libération (40.2), jusqu'à ce que la clé (20) soit extraite du noyau de cylindre (10),
où l'organe de palpage est formé d'un levier (30), monté à pivotement dans le noyau de cylindre (10) et comportant un ergot (37) tourné radialement vers l'extérieur, pour l'action sur la tige de levage (25),
le levier (30) comprenant des parties de palier (31) et le noyau de cylindre (10), dans l'évidement radial (15), comprenant des parties de palier conjuguées (21) qui, en cas de montage, déterminent un axe de pivotement (33), s'étendant transversalement par rapport à l'axe de cylindre (17), du levier (30),
**caractérisé en ce que**
le levier (30) est réalisé à deux branches (34, 35) dans la zone d'axe de pivotement (33), et chacune des deux branches (34, 35) présente un demi-palier (31) des parties de palier, et à chaque demi-palier (31) est associé un demi-palier conjugué (21) des parties de palier conjuguées dans le noyau de cylindre (10),
et **en ce que**, dans la zone des demi-paliers (31) et/ou dans la zone des demi-paliers conjugués (21), sont prévus des chanfreins d'insertion conjugués (22) ou des chanfreins d'insertion (32), tournés les uns vers les autres.

2. Dispositif de verrouillage de direction selon la revendication 1, **caractérisé en ce que** les chanfreins d'insertion (32) s'étendent en direction radiale vers l'axe de cylindre (17) et permettent un montage enfiché (41) radial dans l'évidement radial (15) du noyau de cylindre (10).

3. Dispositif de verrouillage de direction selon la revendication 1 ou 2, **caractérisé en ce que** - observé en vue en coupe longitudinale passant par son axe de pivotement (33) - le levier (30) présente une section transversale en U (34, 35, 36),
**en ce que** les branches de U (34, 35) sont réalisées de façon à être mutuellement élastiques (43),
et **en ce que** les branches de U (34, 35) portent, sur leurs faces extérieures de branche allant en s'écartant les unes des autres, les deux demi-paliers (31).

4. Dispositif de verrouillage de direction selon la revendication 3, **caractérisé en ce que** l'ergot (37) du levier détermine la zone de barre (36) de la section transversale en U (34, 35, 36).

5. Dispositif de verrouillage de direction selon la revendication 3 ou 4, **caractérisé en ce que** la zone de barre (36) du levier en forme de U (30) présente, sur son côté, opposé à l'axe de pivotement de levier (33), au moins par zones, un profil circulaire (38) coaxial.

6. Dispositif de verrouillage de direction selon l'une des revendications 3 à 5, **caractérisé en ce que** la zone de barre du levier (30) en forme de U présente, sur son côté, tourné vers l'axe de pivotement de levier (33), une face d'inclinaison (39) tournée radialement vers l'extérieur,
**en ce que** la face d'inclinaison (39), à la position neutre du noyau de cylindre (10), avant l'extraction de la clé, est saisie par l'arrière par la pièce d'extrémité (46) de la tige de levage (25),
et **en ce que** la pièce d'extrémité de la tige de levage présente une surface d'inclinaison conjuguée (49).

7. Dispositif de verrouillage de direction selon l'une des revendications 1 à 6, **caractérisé en ce que** les deux demi-paliers du levier (30) sont formés de tourillons (31),
**en ce que** les chanfreins d'insertion conjugué (22) sont formés par des entailles obliques, ménagées sur les extrémités de tourillon,
**en ce que** les moitiés de palier conjuguées sont formées de perçages (21),
**en ce que** les perçages sont couverts radialement vers l'extérieur par des parties de paroi (23),
et **en ce que** les faces, tournées radialement vers l'extérieur, de ces parties de paroi (23) sont inclinées et forment les chanfreins d'insertion conjugués (22).

8. Dispositif de verrouillage de direction selon l'une des revendications 1 à 7, **caractérisé en ce que** la tige de levage (25) présente un doigt (28) radial, qui, en cas normal, prend appui sur la came de commande (18, 18'), assujettie en rotation au noyau de cylindre (10).

9. Dispositif de verrouillage de direction selon l'une des revendications 1 à 8, **caractérisé en ce que** la tige de levage (25) est reliée au boulon de blocage (40),
et **en ce que** le déplacement longitudinal (24) et la sollicitation élastique (26) de la tige de levage (25) déterminent simultanément le déplacement et la sollicitation élastique du boulon de blocage (40).
